# EUROPÄISCHE PATENTSCHRIFT

(11) **EP 2 800 681 B1**
(45) Veröffentlichungstag und Bekanntmachung des Hinweises auf die Patenterteilung: **01.12.2021**
(21) Anmeldenummer: 13708703.7
(22) Anmeldetag: 15.02.2013
(51) Int. Cl.: B60T 13/66, B60T 13/68

(54) **BREMSANORDNUNG EINES FAHRZEUGS**
VEHICLE BRAKE ARRANGEMENT
ENSEMBLE DE FREINAGE D'UN VÉHICULE

(30) Priorität: 23.02.2012 DE 102012202761
(43) Veröffentlichungstag der Anmeldung: 12.11.2014
(73) Patentinhaber: Siemens Mobility GmbH, 81739 München (DE)
(72) Erfinder: LICHTERFELD, Jens Peter, 91052 Erlangen (DE); WIESAND, Manfred, 90559 Burgthann (DE)
(86) Internationale Anmeldenummer: PCT/EP2013/053037
(87) Internationale Veröffentlichungsnummer: WO 2013/124213

(56) Entgegenhaltungen:
- EP-A1- 0 648 942
- WO-A2-2011/086029
- US-A- 5 662 391
- US-A1- 2004 119 331

## Beschreibung

Die Erfindung betrifft eine Bremsanordnung eines Fahrzeugs mit einer elektropneumatischen Bremseinrichtung, die eine elektronische Bremssteuerung und eine elektropneumatische Wegeventileinrichtung aufweist und bei der ein pneumatischer Eingang mit einem Ausgang einer Hauptbehälterluftleitung verbunden ist, einem Wechselventil das mit einem ersten Eingang an einen pneumatischen Ausgang der elektropneumatischen Bremseinrichtung angeschlossenen ist, und zumindest einem Bremszylinder, der auf eine Bremsmechanik wirkt.

Die Erfindung betrifft auch ein Bremssystem eines Triebwagens eines Fahrzeugs das neben zumindest einer elektrodynamischen Bremse zumindest eine weitere Bremsanordnung aufweist.

Ferner betrifft die Erfindung ein Fahrzeug, insbesondere Schienenfahrzeug, mit zumindest einem Triebwagen mit einem Bremssystem.

Eine gattungsgemäße Bremsanordnung ist aus der Druckschrift WO 2011/086029 A2 bekannt. Bei dieser bekannten Anordnung ist ein Ausgang des Wechselventils über eine Leitung mit einem Steuereingang einer Steuerventileinrichtung verbunden. Der am Ausgang des Wechselventils bereitgestellte Druck bildet daher einen Vorsteuerdruck für die Steuerventileinrichtung, die in Abhängigkeit dieses Vorsteuerdruckes den Druck in einer Druckkammer eines Bremszylinders regelt, wobei ein pneumatischer Eingang der Steuerventileinrichtung mit der Hauptbehälterluftleitung und ein pneumatischer Ausgang der Steuerventileinrichtung mittels einer Leitung mit einer Druckkammer des Bremszylinders verbunden ist. Der Druck in der Druckkammer ist dabei stufenlos regelbar. Der Bremszylinder ist als aktiver Bremszylinder ausgebildet; er baut also mittelbar über eine Bremsmechanik eine Bremskraft auf, wenn er mit Druck beaufschlagt wird. Hier ist an einem zweiten Eingang des Wechselventils eine Notbremseinrichtung angeschlossen.

Auch aus der Druckschrift US 5 662 391 A ist eine Bremsanordnung mit einem aktiven Bremszylinder und einem Wechselventil bekannt, bei der an einem Eingang des Wechselventils eine elektropneumatische Bremseinrichtung und an einem zweiten Eingang des Wechselventils eine Notbremseinrichtung angeschlossen ist. Der Ausgang des Wechselventils ist mit einem Steuereingang eines Relaisventils verbunden. Das Relaisventil setzt den an seinem Steuereingang anliegenden Druck in einen Bremsdruck für den Bremszylinder um.

Außerdem ist aus der Druckschrift US 2004/119331 A1 eine Bremsanordnung mit einem aktiven Bremszylinder und einem Wegeventil bekannt, bei der das Wegeventil entweder den von einer elektropneumatischen Bremseinrichtung bereitgestellten Druck oder einen Notbremsdruck durchschaltet. Der Ausgang des Wegeventils ist mit einem Steuereingang eines Relaisventils verbunden. Das Relaisventil setzt den an seinem Steuereingang anliegenden Druck in einen Bremsdruck für den Bremszylinder um.

Ferner ist aus der Druckschrift EP 0 648 942 A1 ein lineares pneumatisches Element mit einem Zylinder, einem Kolben und einer Sperrvorrichtung bekannt. Der Zylinder weist eine Zylinderkammer auf, die von zwei Endstücken abgeschlossen ist. In jedem der beiden Endstücke ist jeweils ein Anschluss für die Zufuhr eines Druckmediums, z.B. Druckluft, vorgesehen, so dass sich der in der Zylinderkammer befindliche Kolben unter der Schubkraft des Druckmediums linear hin und her bewegen kann. Mittels der Sperrvorrichtung kann die lineare Bewegung des Kolbens gesperrt bzw. freigegeben werden. Dabei kann eine aktive oder eine passive Wirkung der Sperrvorrichtung voreingestellt werden. Hierzu weist die Sperrvorrichtung zwei Kammern auf, wobei eine wahlweise Zufuhr von Druckluft in die eine oder die andere der beiden Kammern voreingestellt werden kann.

Der Erfindung liegt die Aufgabe zu Grunde, eine gattungsgemäße Bremsanordnung vorzuschlagen, die sehr einfach gestaltet ist und die als Teil eines Bremssystems zum Anhalten des Fahrzeugs und zum Sichern des Fahrzeugs im Stillstand optimiert ist.

Zur Lösung dieser Aufgabe ist bei einer Bremsanordnung der oben genannten Art erfindungsgemäß der zumindest eine Bremszylinder ein passiver Bremszylinder. Ein zweiter Eingang des Wechselventils ist an einen pneumatischen Ausgang einer Notlöseeinrichtung angeschlossen. Ferner ist ein Ausgang des Wechselventils an eine Druckkammer des zumindest einen Bremszylinders angeschlossen.

Ein Vorteil der erfindungsgemäßen Bremsanordnung besteht darin, dass im Unterschied zu der eingangs genannten, aus der Druckschrift WO 2011/086029 A2 bekannten Bremsanordnung der zumindest eine Bremszylinder kein aktiver sondern ein passiver Bremszylinder ist. Das Ausfahren des Kolbens und damit das Betätigen der Bremsmechanik in Zuspannrichtung erfolgt also beispielsweise durch Federkraft. Das Einziehen des Kolbens und damit das Betätigen der Bremsmechanik in Öffnungsrichtung erfolgt durch Einsteuern von Druckluft in die Drucckammer, so dass die Bremsanordnung selbst bei einem Druckluftverlust der Druckkammer in Zuspannrichtung funktionsfähig ist. Anstelle einer Notbremseinrichtung ist eine Notlöseeinrichtung vorgesehen.

Ein weiterer Vorteil der erfindungsgemäßen Bremsanordnung besteht darin, dass im Unterschied zu der eingangs genannten, aus der Druckschrift WO 2011/086029 A2 bekannten Bremsanordnung auf eine dem Wechselventil nachgeschaltete Steuerventileinrichtung verzichtet wird und der am Ausgang des Wechselventils bereitgestellte Druck den Kolben des zumindest einen Bremszylinders entgegen der Federkraft direkt mit Druck beaufschlagt.

Bei der erfindungsgemäßen Bremsanordnung kann die elektropneumatische Wegeventileinrichtung in unterschiedlicher Weise ausgebildet sein.

So wird es als vorteilhaft angesehen, wenn die elektropneumatische Wegeventileinrichtung ein einziges elektrisch betätigtes Wegeventil aufweist, dessen Steuereingang über eine Steuerleitung mit der elektronischen Bremssteuerung elektrisch verbunden ist, wobei die elektropneumatische Wegeventileinrichtung in einer ersten Schaltstellung den Durchfluss zwischen dem pneumatischen Eingang und dem pneumatischen Ausgang der elektropneumatischen Bremseinrichtung sperrt und die Druckkammer ins Freie entlüftet und in einer zweiten Schaltstellung den Durchfluss zwischen dem pneumatischen Eingang und dem pneumatischen Ausgang der elektropneumatischen Bremseinrichtung freigibt. Eine derartige Gestaltung der elektropneumatische Wegeventileinrichtung bewirkt zwar einen elektropneumatische Bremssteuerpfad, der nicht stufenlos geregelt werden kann, führt aber zu einer besonders einfach aufgebauten und kostengünstigen Ausführungsform der erfindungsgemäßen Bremsanordnung.

Alternativ hierzu wird es als vorteilhaft angesehen, wenn die elektropneumatische Wegeventileinrichtung nur zwei elektrisch betätigte Wegeventile aufweist, deren Steuereingänge über jeweils eine Steuerleitung mit der elektronischen Bremssteuerung elektrisch verbunden sind, wobei die elektropneumatische Wegeventileinrichtung in einer ersten Schaltstellung den Durchfluss zwischen dem pneumatischen Eingang und dem pneumatischen Ausgang der elektropneumatischen Bremseinrichtung sperrt und die Druckkammer des zumindest einen Bremszylinders ins Freie entlüften, in einer zweiten Schaltstellung den Durchfluss zwischen dem pneumatischen Eingang und dem pneumatischen Ausgang der elektropneumatischen Bremseinrichtung sperrt und den Druck in der Druckkammer hält und in einer dritten Schaltstellung den Durchfluss zwischen dem pneumatischen Eingang und dem pneumatischen Ausgang der elektropneumatischen Bremseinrichtung freigibt. Eine derartige Gestaltung der elektropneumatischen Wegeventileinrichtung bewirkt bereits einen stufenlos regelbaren elektropneumatischen Bremssteuerpfad.

Weiterhin ist ein Drucksensor von Vorteil, der einen Ist-Druck am pneumatischen Ausgang der elektropneumatischen Bremseinrichtung oder einen Ist-Druck am Ausgang des Wechselventils misst und einen dem gemessenen Ist-Druck entsprechenden elektrischen Ist-Wert an einem Eingang der elektronischen Bremssteuerung bereitstellt. Vorzugsweise regelt dabei die elektronische Bremssteuerung durch Steuersignale die elektropneumatische Wegeventileinrichtung derart, dass der gemessene Ist-Druck einem Soll-Druck entspricht.

Ferner ist ein Lastsensor von Vorteil der einen Lastdruck misst und einen dem gemessenen Lastdruck entsprechenden elektrischen Ist-Wert an einem Eingang der elektronischen Bremssteuerung bereitstellt, so dass der Soll-Druck lastkorrigiert sein kann.

Bei einer bevorzugten Ausgestaltung der erfindungsgemäßen Bremsanordnung ist vorgesehen, dass in zumindest einer Steuerleitung, die einen Steuereingang eines Wegeventils der Wegeventileinrichtung mit der elektronischen Bremssteuerung elektrisch verbindet, ein Schalter angeordnet ist, der mittels einer externen Einrichtung schaltbar ist, so dass die elektrische Verbindung zwischen der elektronischen Bremssteuerung und dem zumindest einen Wegeventil auf einfache Weise durchgeschaltet oder unterbrochen werden kann.

Auch der pneumatische Ausgang der Notlöseeinrichtung kann in unterschiedlicher Weise bereitgestellt sein.

So ist beispielsweise vorgesehen, dass ein Ausgang einer Notlöseleitung, in die zum Notlösen der dem zumindest einen Bremszylinder zugeordneten Bremsmechanik ein geeigneter Notlösedruck eingespeist wird, den pneumatischen Ausgang der Notlöseeinrichtung bildet.

Alternativ hierzu kann aber auch ein Ventil, dessen pneumatischer Eingang mit der Hauptbehälterluftleitung verbunden ist, den pneumatischen Ausgang der Notlöseeinrichtung bilden, wobei das Ventil in einer ersten Schaltstellung drucklos ist und in einer zweiten Schaltstellung den Druck der Hauptbehälterluftleitung direkt auf das Wechselventil schaltet. Dabei kann das Ventil ein elektrisch angesteuertes Wegeventil oder ein Absperrhahn mit Entlüftung sein.

Vorzugsweise bildet die erfindungsgemäße Bremsanordnung bei einem Bremssystem eines Triebwagens eines Fahrzeugs (insbesondere eines Schienenfahrzeugs) neben einer elektrodynamischen Bremse eine weitere Bremsanordnung. Vorzugsweise ist dabei die zumindest eine elektrodynamische Bremse eine anrechenbare Bremse - also eine Bremse, deren Bremskraft, insbesondere bei einer Notbremsung, auf das Bremsgewicht des Fahrzeuges anrechenbar ist. Die für die Anrechenbarkeit der Bremskraft der elektrodynamischen Bremse zu erfüllenden Bedingungen sind in Regelwerken - beispielsweise dem derzeit gültigen Regelwerk UIC 544-1 - festgelegt.

Es wird als vorteilhaft angesehen, wenn die elektrodynamische Bremse von einem im Bremsbetrieb als generatorische Bremse wirkenden Traktionsantrieb gebildet ist, der einen permanenterregten Synchronmotor aufweist. Vorzugsweise sind Wicklungen des permanenterregten Synchronmotors im Bremsbetrieb über Widerstände kurzgeschlossen, so dass mit dem permanenterregten Synchronmotor mit sehr hoher Sicherheit ein Bremsmoment erzeugt werden kann. Die Widerstände können vorzugsweise im Stern geschaltet und im Bremsbetrieb mit den Wicklungen des permanenterregten Synchronmotors verbunden sein. Ein derartiger Traktionsantrieb ist beispielsweise aus der Druckschrift DE 101 60 612 A1 bekannt.

Zur weiteren Erläuterung der Erfindung sind in der
Figur 1 ein erfindungsgemäßes Schienenfahrzeug mit mehreren Wagen, die jeweils zwei Drehgestelle aufweisen, und mit den Wagen zugeordneten erfindungsgemäßen Bremssystemen mit erfindungsgemäßen Bremsanordnungen, in der
Figur 2 eines der Drehgestelle, bei dem zum Bremsen der Triebachsen nur anrechenbare elektrodynamische Bremsen vorgesehen sind, in der
Figur 3 ein weiteres der Drehgestelle, bei dem zum Bremsen der Triebachsen einerseits anrechenbare elektrodynamische Bremsen und zusätzlich eine erfindungsgemäße Bremsanordnung vorgesehen sind, in den
Figuren 4 bis 7 vier Ausführungsvarianten der erfindungsgemäßen Bremsanordnung gezeigt.

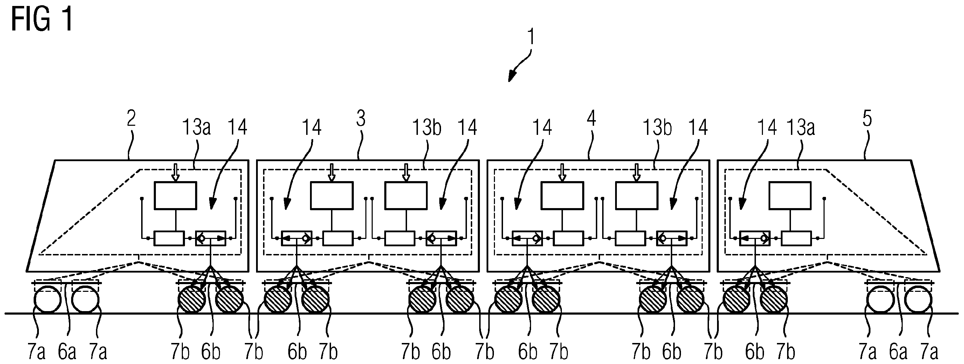

Die Figur 1 zeigt ein erfindungsgemäßes Fahrzeug 1 in Form eines Schienenfahrzeugs. Die beispielhaft dargestellte Zugkonfiguration des Schienenfahrzeugs umfasst vier Wagen 2 bis 5. Die Wagen 2 und 5 sind Endwagen und die Wagen 3 und 4 sind Mittelwagen. Alle Wagen 2 bis 5 sind als Triebwagen ausgebildet und umfassen jeweils zwei Drehgestelle 6a, 6b bzw. 6b, 6b, wobei jedes der Drehgestelle zwei Radsätze 7a bzw. 7b aufweist.

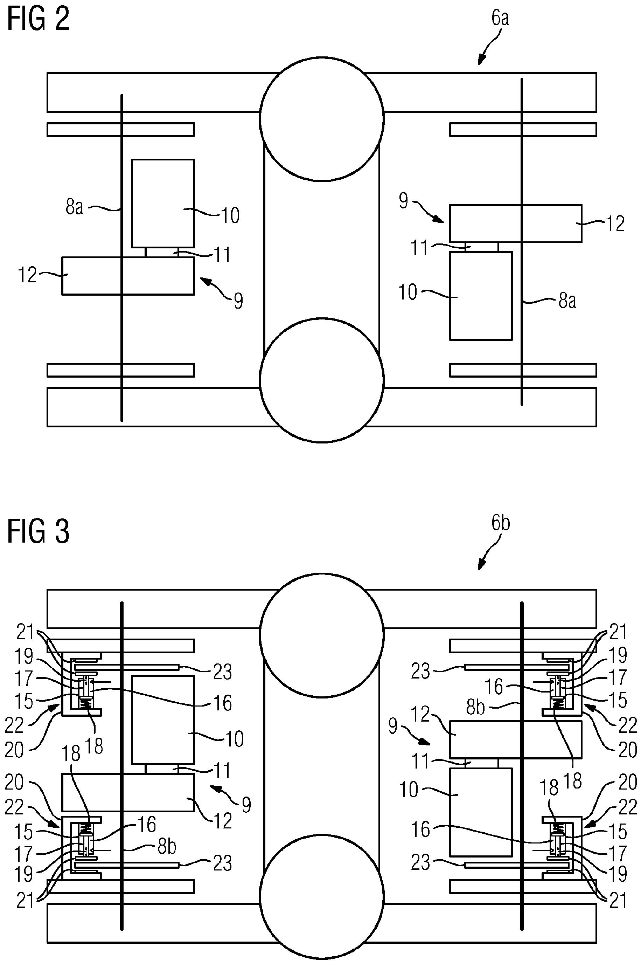

Gemäß Figur 2, die eines der in Figur 1 mit dem Bezugszeichen 6a versehenen Drehgestelle der Endwagen 2, 5 zeigt, und gemäß Figur 3, die eines der weiteren in Figur 1 mit dem Bezugszeichen 6b versehenen Drehgestelle zeigt, sind alle Achsen der Wagen der dargestellten Zugkonfiguration Triebachsen 8a bzw. 8b und hierzu jeweils mittels eines Traktionsantriebes 9 angetrieben. Die Traktionsantriebe 9 wirken im Bremsbetrieb jeweils als generatorische und demnach als elektrodynamische Bremse und sind damit Bestandteil des Bremssystems des jeweiligen Triebwagens.

Die Traktionsantriebe 9 weisen jeweils einen permanenterregten Synchronmotor 10 auf, dessen Wicklungen im Bremsbetrieb über Widerstände kurzgeschlossen sind. Die Traktionsantriebe weisen neben dem Synchronmotor 10 weiterhin jeweils eine Kupplung 11 und optional ein Getriebe 12 auf.

Die hier nicht gezeigten Widerstände der Traktionsantriebe sind beispielsweise im Stern geschaltet und im Bremsbetrieb mit den Wicklungen des permanenterregten Synchronmotors verbunden, so wie dies beispielsweise in der Druckschrift DE 101 60 612 A1 ausführlich beschrieben ist. Die Traktionsantriebe bilden damit ausfallsichere anrechenbare elektrodynamische Bremsen. - Abweichend hiervon kann die generatorische Bremse aber auch in anderer Weise als ausfallsichere anrechenbare Bremse ausgebildet sein.

Die Bremssysteme der Triebwagen 2 bis 5, die in der Figur 1 symbolisch dargestellt und als Ganzes mit den Bezugszeichen 13a bzw. 13b versehen sind, weisen jeweils zumindest eine erfindungsgemäße Bremsanordnung 14 auf. Bei den Bremssystemen 13a der Endwagen 2 und 5 werden die mit dem Bezugszeichen 7a versehenen Triebachsen der Drehgestelle 6a an den Enden der Endwagen nicht mittels pneumatischer Bremsen - insbesondere nicht mittels einer erfindungsgemäßen Bremsanordnung 14 gebremst. Im Unterschied hierzu ist allen übrigen Drehgestellen 6b jeweils eine erfindungsgemäße Bremsanordnung 14 zugeordnet. Die Triebachsen 7b der Triebwagen 6b sind also drehgestellselektiv mit einer erfindungsgemäßen Bremsanordnung ausgestattet.

Abweichend hiervon ist aber auch eine achsselektive oder eine wagenselektive Ausstattung mit der erfindungsgemäßen Bremsanordnung möglich. Es kann also auch jeder Triebachse 7b jeweils eine erfindungsgemäße Bremsanordnung oder allen Triebachsen 7b eines Triebwagens eine gemeinsame erfindungsgemäße Bremsanordnung zugeordnet werden.

Die erfindungsgemäßen Bremsanordnungen 14 weisen jeweils einen elektropneumatischen Bremssteuerpfades und einen Notlösepfad auf und bauen über Druckluft Druck auf zumindest ein Stellglied auf. Bei der beispielhaft gezeigten erfindungsgemäßen Bremsanordnung 14 sind den beiden Triebachse 7b des jeweiligen Drehgestells 6b jeweils zwei Stellglieder und damit dem jeweiligen Drehgestell 6b vier Stellglieder zugeordnet. Die Stellglieder sind jeweils in Form eines passiven Druckzylinders 15 ausgebildet. Die passiven Druckzylinder 15 sind Federspeicherbremszylinder und weisen jeweils einen in einer Druckkammer 16 verschiebbaren Kolben 17 auf, wobei das Ausfahren des Kolbens 17 unter der Kraft einer Feder 18 erfolgt. Die aus der Einwirkung der Feder 18 resultierende Hubbewegung 19 des Kolbens 17 wird in eine hier beispielhaft mit Bremssattel 20 und Bremsbelägen 21 versehene Bremsmechanik 22 eingeleitet und die Bremsmechanik 22 wird in einer Zuspannrichtung über einer zugeordneten Bremsscheibe 23 zugespannt. Die Bremsscheibe 23 ist drehfest auf der zugeordneten Triebachse 7b angeordnet, so dass die Bremsbeläge 21 dann mit einer als Zuspannkraft bezeichneten Normalkraft auf die zugeordnete Bremsscheibe 23 wirken. Die Zuspannkraft erzeugt dann eine Reibwirkung, welche die Bremsscheibe 23 und damit die jeweilige Triebachse 7b verzögert.

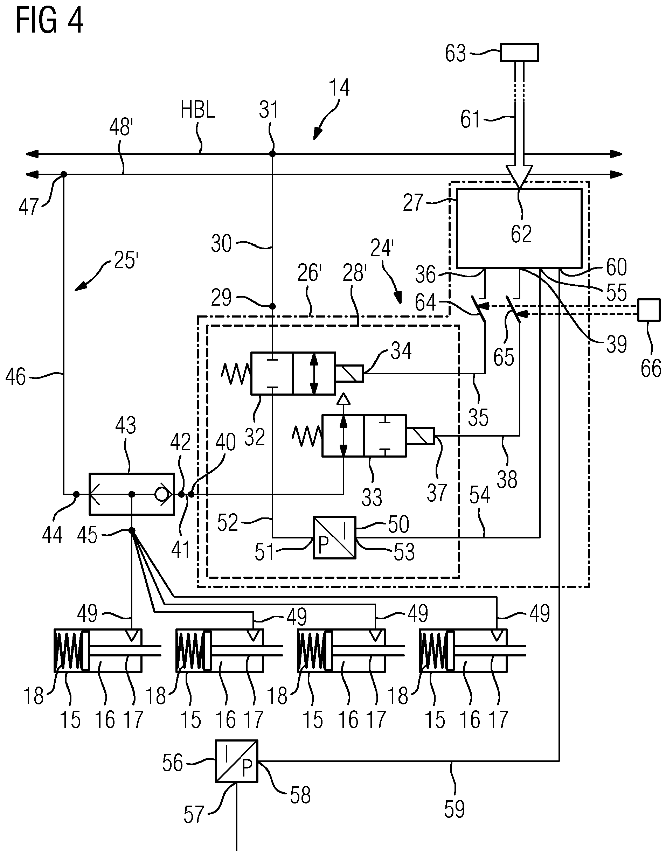

Die Figur 4 zeigt die erste Ausführungsvariante 14 der erfindungsgemäßen Bremsanordnung mit einem stufenlos regelbaren elektropneumatischen Bremssteuerpfad 24' und mit einem pneumatischen Notlösepfad 25'.

Diese erste Ausführungsvariante 14 der erfindungsgemäßen Bremsanordnung umfasst eine elektropneumatische Bremseinrichtung 26', die eine elektronische Bremssteuerung 27 und eine elektropneumatische Wegeventileinrichtung 28' aufweist und bei der ein pneumatischer Eingang 29 über eine Anschlussleitung 30 mit einem Ausgang 31 einer Hauptbehälterluftleitung HBL des Fahrzeugs 1 verbunden ist.

Die elektropneumatische Wegeventileinrichtung 28' weist nur zwei elektrisch betätigte Wegeventile in Form von 2/2-Wegeventilen - nämlich ein Belüftungsventil 32 und ein Halteventil 33 - auf. Ein Steuereingang 34 des Wegeventils 32 ist über eine elektrische Steuerleitung 35 mit einem Steuerausgang 36 der elektronischen Bremssteuerung 27 elektrisch verbunden. Ein Steuereingang 37 des Wegeventils 33 ist über eine elektrische Steuerleitung 38 mit einem Steuerausgang 39 der elektronischen Bremssteuerung 27 elektrisch verbunden. Die beiden Wegeventile 32 und 33 sind mit elektrischen Steuersignalen der elektronischen Bremssteuerung 27 beaufschlagt. An einen Ausgang der elektropneumatischen Wegeventileinrichtung 28', der zugleich den pneumatischen Ausgang 40 der elektropneumatischen Bremseinrichtung 26' bildet, ist über eine Anschlussleitung 41 ein Eingang 42 eines Wechselventils 43 angeschlossen. Das Wechselventil 43 ist von einem Doppelrückschlagventil gebildet und verwirklicht demnach eine ODER-Funktion. Das Wechselventil 41 weist entsprechend einen zweiten Eingang 44 und einen Ausgang 45 auf, wobei von den beiden Eingängen 42, 44 derjenige automatisch mit dem Ausgang 45 verbunden wird, an dem der höhere Druck anliegt, während der jeweils andere Eingang verschlossen wird.

Der zweite Eingang 44 des Wechselventils 43 ist über eine Anschlussleitung 46 an einen pneumatischen Ausgang 47 einer Notlöseeinrichtung 48' angeschlossen, die von einer Notlöseleitung gebildet ist, in die zum Notlösen der Bremszylinder ein geeigneter Notlösedruck eingespeist wird. Den pneumatischen Ausgang 47 der Notlöseeinrichtung 48' bildet ein Ausgang der Notlöseleitung.

Die Druckkammern 16 der vier Bremszylinder 15 sind jeweils über eine Anschlussleitung 49 an den Ausgang 45 des Wechselventils 43 angeschlossen.

In einer in der Figur 4 gezeigten ersten Schaltstellung der Wegeventileinrichtung 28', bei der die beiden Wegeventile 32 und 33 nicht bestromt sind, sperrt die elektropneumatische Wegeventileinrichtung 28' den Durchfluss zwischen dem pneumatischen Eingang 29 und dem pneumatischen Ausgang 40 der elektropneumatischen Bremseinrichtung und entlüftet die mit dem Ausgang des Wechselventils 43 verbundenen Druckkammern 16 ins Freie.

In einer zweiten Schaltstellung der Wegeventileinrichtung 28', bei der das Belüftungsventil 32 nicht bestromt ist und das Halteventil bestromt ist, sperrt die elektropneumatische Wegeventileinrichtung 28' den Durchfluss zwischen dem pneumatischen Eingang 29 und dem pneumatischen Ausgang 40 der elektropneumatischen Bremseinrichtung und hält den Druck in den Druckkammern 16.

In einer dritten Schaltstellung der Wegeventileinrichtung 28', bei der die beiden Wegeventile 32 und 33 bestromt sind, gibt die elektropneumatische Wegeventileinrichtung 28' den Durchfluss zwischen dem pneumatischen Eingang 29 und dem pneumatischen Ausgang 40 der elektropneumatischen Bremseinrichtung frei, so dass der Druck in den Druckkammern 16 steigt.

Wie die Figur 4 ferner zeigt, ist ein Drucksensor 50 mit seinem Druckeingang 51 über eine Anschlussleitung 52 mit dem Ausgang 40 der elektropneumatische Wegeventileinrichtung 28' und entsprechend mittelbar über die Anschlussleitung 41 auch mit dem Eingang 42 des Wechselventils 41 verbunden. Über die Anschlussleitung 52 wird der Drucksensor 50 somit mit einem Ist-Druck pᵢₛₜ beaufschlagt und führt einen an seinem Stromausgang 53 bereitgestellten Strom, der dem gemessenen Ist-Druck pᵢₛₜ entspricht, über eine Anschlussleitung 54 der elektronische Bremssteuerung 27 an einem ersten Eingang 55 zu. Der Drucksensor 50 stellt somit einen dem gemessenen Ist-Druck pᵢₛₜ entsprechenden ersten elektrischen Ist-Wert an dem Eingang 55 der elektronischen Bremssteuerung 27 bereit.

Ergänzend ist noch darauf hinzuweisen, dass zu Zwecken der Überwachung und Lasterfassung ein weiterer Drucksensor 56 an seinem Druckeingang 57 von einem Lastdruck p_{Last} beaufschlagt ist und einen an seinem Stromausgang 58 bereitgestellten Strom, der dem gemessenen Lastdruck p_{Last} entspricht, über eine Anschlussleitung 59 der elektronische Bremssteuerung 27 an einem zweiten Eingang 60 zuführt. Der weitere Drucksensor 56 stellt somit einen dem gemessenen Lastdruck p_{Last} entsprechenden zweiten elektrischen Ist-Wert an dem Eingang 60 der elektronischen Bremssteuerung 27 bereit.

Die in Figur 4 dargestellte Bremseinrichtung arbeitet in folgender Weise:
Da die Bremszylinder 15 passive Bremszylinder sind, bei denen das Ausfahren der Kolben 17 und damit das Betätigen der Bremsmechaniken 22 in Zuspannrichtung durch Federkraft und das Einziehen der Kolben 17 durch Einsteuern von Druckluft in die Druckkammern 16 erfolgt, muss zum Lösen der Bremsmechaniken (zum Betätigen der Bremsmechaniken in Öffnungsrichtung) Druckluft in die Bremszylinder 15 eingespeist werden. Der Druck in den Druckkammern 16, der im Weiteren auch als Bremszylinderdruck bezeichnet ist, wird mittels der an den Steuerausgängen 36, 39 bereitgestellten elektrischen Steuersignale der elektronischen Bremssteuerung - hier durch Bestromen oder nicht Bestromen der Wegeventile 32, 33 - in Verbindung mit den Wegeventilen 32, 33 geregelt. Hierzu erhält die elektronische Bremssteuerung 27 beispielsweise über einen Fahrzeugbus 61, der an einen dritten Eingang 62 der Bremssteuerung 27 angeschlossen ist, von einer Fahrzeugsteuerung 63 einen entsprechenden Bremssollwert, der einem vom Zugführer erzeugten Sollwertsignal entspricht. Dabei wird der Bremszylinderdruck durch das Bestromen des Halteventils 33 und des Belüftungsventils 32 erhöht und durch das Bestromen des Halteventils 33 beibehalten; durch Entstromen beider Ventile 32, 33 wird der Druck in den Druckkammern reduziert.

Die elektrischen Steuerleitungen 35, 38 können jeweils durch einen Schaltkontakt 64, 65 unterbrochen bzw. durchgeschaltet werden. Diese Schaltkontakte 64, 65 werden mittels einer externen Einrichtung 66 geschalte. Insbesondere kann durch die externe Einrichtung die Ansteuerung der Wegeventile 32, 33 verhindert und somit in sicherheitsrelevanten Situationen ein sicheres Anlegen der Bremsmechaniken (sicheres Betätigen in Schließrichtung) gewährleistet werden.

Die elektronische Bremssteuerung 27 berechnet anhand des Bremssollwertes und dem zweiten elektrischen Ist-Wert einen lastkorrigierter Soll-Druck pₛₒₗₗ. Anhand dieses Soll-Drucks pₛₒₗₗ regelt die elektropneumatische Bremseinrichtung den Ist-Druck, der über den Drucksensor 50 wiederum von der elektronischen Bremssteuerung 27 erfasst wird, so dass der Ist-Druck sehr genau auf den berechneten lastkorrigierten Solldruck pₛₒₗₗ eingestellt werden und mögliche Fehler bei der Einstellung erkannt werden können. Alternativ kann anstelle des Drucksensors 50 oder in Ergänzung zum Drucksensor 50 ein weiterer Drucksensor nach dem Wechselventil 43 angeschlossen werden, um den Notlösezustand zu detektieren.

Um bei einer Fehlfunktion der elektronischen Bremssteuerung 27 oder der Wegeventileinrichtung 28' die Bremsmechaniken 22 dennoch lösen zu können, verfügt die erfindungsgemäße Bremsanordnung 14 über den pneumatischen Notlösepfad 25'. Zum Notlösen der Bremsmechaniken 22 wird dabei in die Notlöseleitung 48' des Fahrzeugs 1 ein zum Einziehen der Kolben 17 notwendiger Druck eingespeist. Dieser Druck wird dann durch das Wechselventil 43 in die Druckkammern 16 der Bremszylinder 15 geführt.

Mit Hilfe des Lastdrucks p_{Last}, welcher durch die elektronischen Bremssteuerung 27 eingelesen wird, kann beim Anhaltevorgang - insbesondere bei einer Geschwindigkeit unterhalb von 10 km/h des Fahrzeugs - in Abhängigkeit der Beladung des Fahrzeugs, die Bremskraft mit unterschiedlicher Steilheit aufgebaut werden, um ein möglichst komfortables Anhalteverhalten zu realisieren.

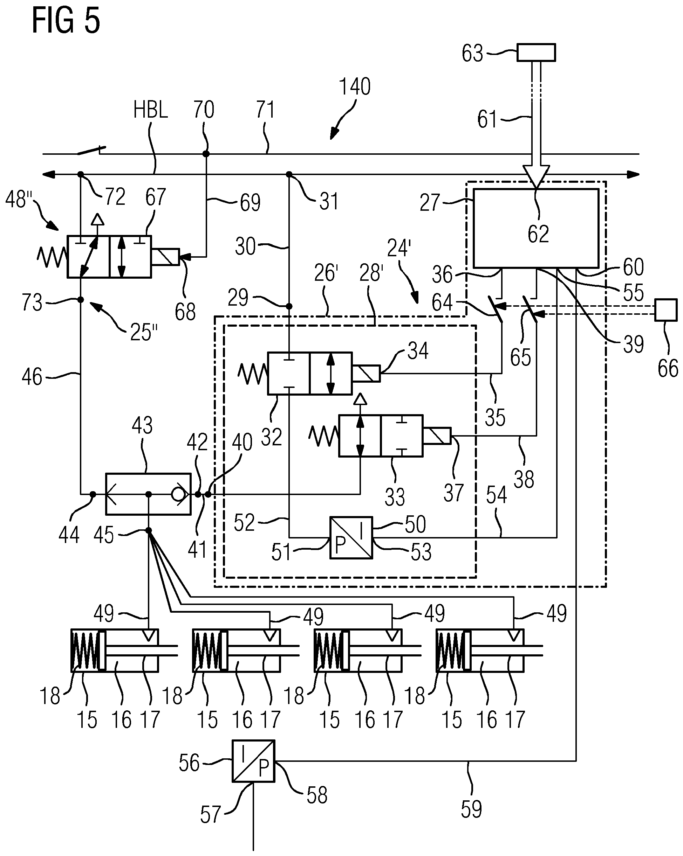

Eine in der Figur 5 gezeigte zweite Ausführungsvariante 140 der erfindungsgemäßen Bremsanordnung weist den gleichen stufenlos regelbaren elektropneumatischen Bremssteuerpfad 24' wie die in der Figur 4 gezeigte erste Ausführungsvariante 14 der erfindungsgemäßen Bremsanordnung auf. Daneben weist die zweite Ausführungsvariante 140 der erfindungsgemäßen Bremsanordnung im Unterschied zu der ersten Ausführungsvariante 14 einen als Ganzes mit dem Bezugszeichen 25" versehenen elektropneumatischen Notlösepfad auf. Es sind in der Figur 5 Elemente, die denen nach Figur 1 entsprechen, mit gleichen Bezugszeichen versehen.

Bei der zweiten Ausführungsvariante 140 der erfindungsgemäßen Bremsanordnung nach Figur 5 arbeitet der elektropneumatische Bremssteuerpfad in gleicher Weise wie bei der ersten Ausführungsvariante 14 nach Figur 4. Wird durch den Zugführer ein Sollwertsignal erzeugt, dann wird ein Bremssollwert beispielsweise über den Fahrzeugbus 61 an die elektronische Bremssteuerung 27 übermittelt. Die elektronische Bremssteuerung 27 erfasst durch den zusätzlichen Drucksensor 56 den Lastdruck p_{Last} und berechnet anschließend den für den Bremssollwert benötigten lastkorrigierten Soll-Druck pₛₒₗₗ. Anschließend steuert die elektronische Bremssteuerung 27 mit Hilfe des Halteventils 33 und des Belüftungsventils 32 den Ist-Druck pᵢₛₜ. Dieser Ist-Druck pᵢₛₜ wird durch Drucksensor 50 erfasst und mittels der elektropneumatischen Bremseinrichtung 26' auf den berechneten Soll-Druck pₛₒₗₗ geregelt. Das Wechselventil 43 schaltet den Ist-Druck pᵢₛₜ zu den Druckkammern 16 der Bremszylinder 15 durch. Zum Lösen der Bremsmechaniken 22 werden das Halteventil 33 und das Belüftungsventil 32 nicht bestromt und damit der Druck in den Druckkammern 16 der Bremszylinder 15 erhöht.

Bei dieser zweiten Ausführungsvariante 140 erfolgt das Notlösen im Unterschied zu der ersten Ausführungsvariante 14 nach Figur 4 durch ein Ventil, das hier beispielhaft als elektrisch angesteuertes Wegeventil 67 ausgebildet und mit seinem Steuereingang 68 über eine Anschlussleitung 69 an einen Ausgang 70 eines Notbremsschleifenstromkreises 71 angeschlossen ist. Das Wegeventil 67 bildet hier zusammen mit dem Notbremsschleifenstromkreises 71 eine als Ganzes mit dem Bezugszeichen 48" versehene Notbremseinrichtung. Dabei schaltet das Wegeventil 67, dessen pneumatischer Eingang 72 mit der Hauptbehälterluftleitung HBL und dessen pneumatischer Ausgang 73 mit dem zweiten pneumatischen Eingang 44 des Wechselventils 43 verbunden, den Druck aus der Hauptbehälterluftleitung HBL direkt auf das Wechselventil 43 durch. Alternativ kann anstelle des elektrisch angesteuerten Wegeventils 67 auch ein mechanisch betätigter Absperrhahn mit Entlüftung eingesetzt werden, der manuell, z.B. aus dem Wageninneren, bedient werden kann.

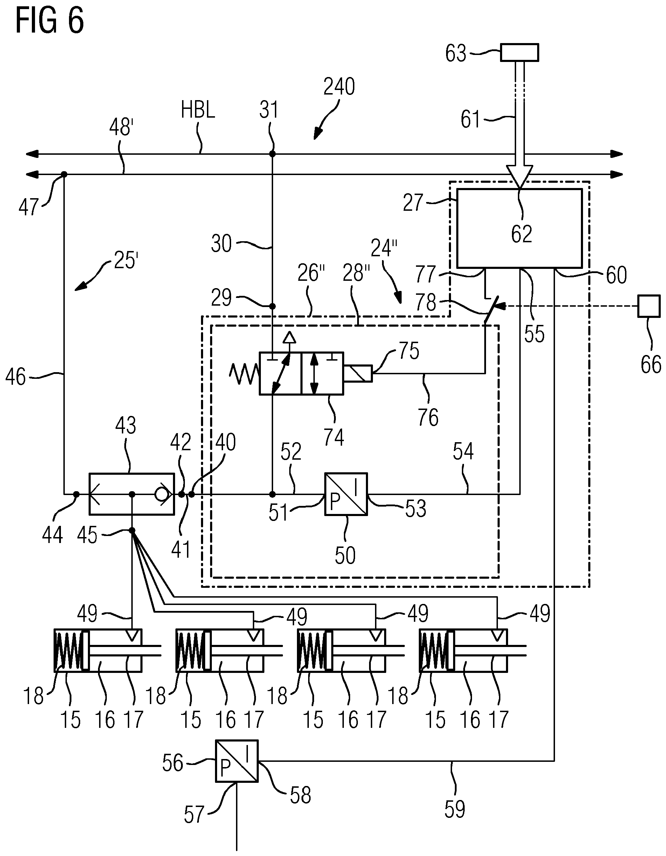

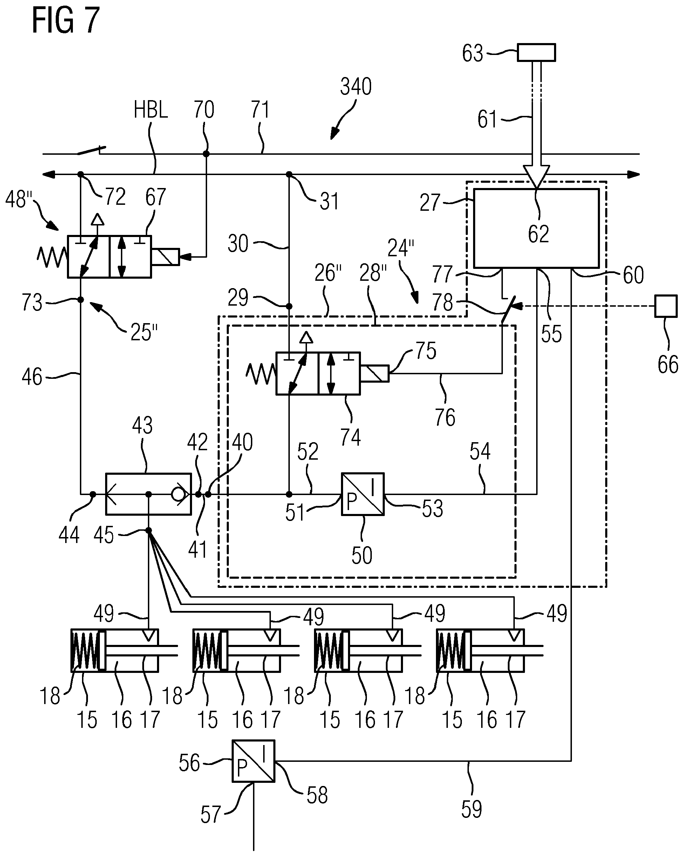

Gemäß den in den Figuren 6 und 7 gezeigten Ausführungsvarianten 240 und 340 der erfindungsgemäßen Bremsanordnung kann alternativ zu dem in den Figuren 4 und 5 gezeigten stufenlos regelbaren elektropneumatischen Bremssteuerpfad 24' auch ein Bremssteuerpfad 24" zum Einsatz kommen, bei dem der in den Bremszylindern 15 eingestellte Druck nicht stufenlos regelbar ist. Hierbei handelt es sich um zwei sehr kostengünstige Ausführungsvariante 240 und 340 der erfindungsgemäßen Bremsanordnung. Dabei wird durch ein einziges Wegeventil 74 der Druck der Hauptbehälterluftleitung HBL in die Druckkammern geleitet oder die Druckkammer ins Freie entlüftet. Entsprechend wird die Bremsmechanik gelöst oder angelegt. Hier dient der Drucksensor 50 nur zur Überwachung und kann optional ebenfalls nach dem Wechselventil 43 angeschlossen werden. Ein Steuereingang 75 des Wegeventils 74 ist über eine Steuerleitung 76 mit einem Steuerausgang 77 der elektronischen Bremssteuerung verbunden. Der pneumatische Eingang des Wegeventils 74 bildet den pneumatischen Eingang 29 der elektropneumatischen Bremseinrichtung 26" und der pneumatischer Ausgang des Wegeventils 74 bildet den pneumatischen Ausgang 40 der elektropneumatischen Bremseinrichtung 26".

Wahlweise kann auch hier das Notlösen gemäß Figur 6 über einen pneumatischen Notlösepfad 25' durch den Anschluss des Wechselventils 43 an eine Notlöseleitung 48' oder gemäß Figur 7 über einen elektropneumatischen Notlösepfad 25" mit Hilfe eines Ventils, z.B. des hier gezeigten elektrisch angesteuerten Wegeventils 67 oder aber manuell durch einen mechanisch bedienbaren Absperrhahn realisiert werden.

Mit der erfindungsgemäßen Bremsanordnung 14; 140; 240; 340 lassen sich die Bremssysteme 13a und 13b für die Triebwagen des Fahrzeugs 1 besonders kostengünstig umzusetzen. So reduziert sich bei den Bremssystemen 13a und 13b der Triebwagen 2 bis 5, bei denen die Triebachsen 8b über eine anrechenbare elektrodynamische Bremse 9 verfügen, die Funktion der pneumatischen Bremsanordnung insbesondere auf das Festhalten des Fahrzeugs 1 im Gefälle. Außerdem konnte bei einigen Triebachsen - hier bei den Triebachsen 8a, die ebenfalls über eine anrechenbare elektrodynamische Bremse verfügen, sogar auf die Ausrüstung mit einer zusätzlichen Bremsanordnung verzichtet werden.

Indem man Gruppen von Triebachsen achs-, oder drehgestell- oder wagenselektiv (hier beispielhaft drehgestellselektiv) mit einer der oben beschriebenen Ausführungsvarianten der erfindungsgemäßen Bremsanordnungen versieht und einige Triebachsen des Fahrzeugs (sofern diese Treibachsen eine anrechenbare elektrodynamische Bremse aufweisen) nicht mit einer zusätzlichen Bremsanordnung ausrüstet wird ein besonders günstiges Gesamtbremssystem des erfindungsgemäßen Fahrzeugs geschaffen.

Bei Fahrzeugen, bei denen nicht alle Achsen mit einer anrechenbaren elektrodynamischen Bremse ausgestattet sind, müssen diejenigen Achsen ohne anrechenbare elektrodynamische Bremse zusätzlich mit einer anrechenbaren pneumatischen Bremsanordnung, wie sie beispielsweise aus der Druckschrift WO 2011/086029 A2 bekannt ist, ausgerüstet werden. Die Achsen, welche eine anrechenbare elektrodynamische Bremse aufweisen, können weiterhin mit einer einfachen Bremsanordnung gemäß der Erfindung gebremst werden.

## Patentansprüche

1. Bremsanordnung (14; 140; 240; 340) eines Fahrzeugs (1) mit
- einer elektropneumatischen Bremseinrichtung (26'; 26"), die eine elektronische Bremssteuerung (27) und eine elektropneumatische Wegeventileinrichtung (28'; 28") aufweist und bei der ein pneumatischer Eingang (29) mit einem Ausgang (31) einer Hauptbehälterluftleitung (HBL) des Fahrzeugs (1) verbunden ist,
- einem Wechselventil (43) das mit einem ersten Eingang (42) an einen pneumatischen Ausgang (40) der elektropneumatischen Bremseinrichtung (26'; 26") angeschlossenen ist, und
- zumindest einem Bremszylinder (15), der auf eine Bremsmechanik (22) wirkt,
**dadurch gekennzeichnet,**
- **dass** der zumindest eine Bremszylinder (15) ein passiver Bremszylinder ist und
- **dass** ein zweiter Eingang (44) des Wechselventils (43) an einen pneumatischen Ausgang (47; 73) einer Notlöseeinrichtung (48'; 48") und der Ausgang (45) des Wechselventils (43) an eine Druckkammer (16) des zumindest einen Bremszylinders (15) angeschlossen sind.

2. Bremsanordnung (14; 140; 240; 340) nach Anspruch 1,
**dadurch gekennzeichnet, dass**
in zumindest einer Steuerleitung (35, 38; 76), die einen Steuereingang (36, 39; 77) eines Wegeventils (32, 33; 74) der Wegeventileinrichtung (28'; 28") mit der elektronischen Bremssteuerung (27) elektrisch verbindet, ein mittels einer externen Einrichtung (66) schaltbarer Schalter (64, 65; 78) angeordnet ist.

3. Bremsanordnung (14; 240) nach einem der Ansprüche 1 oder 2,
**dadurch gekennzeichnet, dass**
ein Ausgang einer Notlöseleitung, in die zum Notlösen der dem zumindest einen Bremszylinder zugeordneten Bremsmechanik ein geeigneter Notlösedruck eingespeist wird, den pneumatischen Ausgang (47) der Notlöseeinrichtung (48') bildet.

4. Bremsanordnung (140; 340) nach einem der Ansprüche 1 oder 2,
**gekennzeichnet durch**
ein Ventil, dessen pneumatischer Eingang (72) mit der Hauptbehälterluftleitung (HBL) verbunden ist, den pneumatischen Ausgang (73) der Notlöseeinrichtung (48") bildet, wobei das Ventil in einer ersten Schaltstellung drucklos ist und in einer zweiten Schaltstellung den Druck der Hauptbehälterluftleitung (HBL) direkt auf das Wechselventil (43) schaltet.

5. Bremsanordnung (140; 340) nach Anspruch 4,
**dadurch gekennzeichnet, dass**
das Ventil ein elektrisch angesteuertes Wegeventil (67) oder ein Absperrhahn mit Entlüftung ist.

6. Bremssystem (13a; 13b) eines Triebwagens (2; 3; 4; 5) eines Fahrzeugs (1) das neben zumindest einer elektrodynamischen Bremse zumindest eine weitere Bremsanordnung (14; 140; 240; 340) aufweist,
**dadurch gekennzeichnet, dass**
die zumindest eine weitere Bremsanordnung (14; 140; 240; 340) nach einem der Ansprüche 1 bis 5 ausgebildet ist.

7. Bremssystem (13a; 13b) nach Anspruch 6,
**dadurch gekennzeichnet, dass**
die zumindest eine elektrodynamische Bremse eine anrechenbare Bremse ist, so dass die Bremskraft der zumindest einen elektrodynamischen Bremse, insbesondere bei einer Notbremsung, auf das Bremsgewicht des Fahrzeuges anrechenbar ist.

8. Bremssystem (13a; 13b) nach einem der Ansprüche 6 oder 7,
**dadurch gekennzeichnet, dass**
die elektrodynamische Bremse von einem im Bremsbetrieb als generatorische Bremse wirkenden Traktionsantrieb (9) gebildet ist, der einen permanenterregten Synchronmotor (10) aufweist.

9. Bremssystem (13a; 13b) nach Anspruch 8,
**dadurch gekennzeichnet, dass** Wicklungen des permanenterregten Synchronmotors (10) im Bremsbetrieb über Widerstände kurzgeschlossen sind, wobei die Widerstände im Stern geschaltet und im Bremsbetrieb mit den Wicklungen des permanenterregten Synchronmotors verbunden sind.

10. Fahrzeug (1), insbesondere Schienenfahrzeug, mit zumindest einem Triebwagen (2, 3, 4, 5) mit einem Bremssystem (13a; 13b),
**dadurch gekennzeichnet, dass**
das Bremssystem (13a; 13b) nach einem der Ansprüche 6 bis 9 ausgebildet ist.

## Claims

1. Brake assembly (14; 140; 240; 340) of a vehicle (1) comprising
- an electropneumatic braking device (26'; 26"), which has an electronic brake control (27) and an electropneumatic directional valve device (28'; 28") and wherein a pneumatic input (29) is connected to an output (31) of a primary vessel air line (HBL) of the vehicle (1),
- a shuttle valve (43) which is connected to a first input (42) at a pneumatic output (40) of the electropneumatic braking device (26'; 26''), and
- at least one brake cylinder (15) which acts on a braking mechanism (22),
**characterised in that**
- the at least one brake cylinder (15) is a passive brake cylinder and
- **in that** a second input (44) of the shuttle valve (43) is connected to a pneumatic output (47; 73) of an emergency release device (48'; 48") and the output (45) of the shuttle valve (43) is connected to a pressure chamber (16) of the at least one brake cylinder (15).

2. Brake assembly (14; 140; 240; 340) according to claim 1,
**characterised in that**
a switch (64, 65; 78) which is switchable by means of an external apparatus (66) is arranged in at least one control line (35, 38; 76) which electrically connects a control input (36, 39; 77) of a directional valve (32, 33; 74) of the directional valve device (28'; 28") to the electronic brake control (27).

3. Brake assembly (14; 240) according to one of claims 1 or 2,
**characterised in that**
an output of an emergency release line into which a suitable emergency release pressure is fed in order to emergency release the braking mechanism associated with the at least one brake cylinder constitutes the pneumatic output (47) of the emergency release device (48').

4. Brake assembly (140; 340) according to one of claims 1 or 2,
**characterised by**
a valve the pneumatic input (72) of which is connected to the primary vessel air line (HBL) constitutes the pneumatic output (73) of the emergency release device (48"), wherein the valve is pressure-free in a first switch position and, in a second switch position, switches the pressure of the primary vessel air line (HBL) directly to the shuttle valve (43) .

5. Brake assembly (140; 340) according to claim 4,
**characterised in that**
the valve is an electrically controlled directional valve (67) or a stop valve with venting.

6. Braking system (13a; 13b) of a power wagon (2; 3; 4; 5) of a vehicle (1) which, apart from at least one electrodynamic brake, has at least one further brake assembly (14; 140; 240; 340),
**characterised in that**
the at least one further brake assembly (14; 140; 240; 340) is configured according to one of claims 1 to 5.

7. Braking system (13a; 13b) according to claim 6,
**characterised in that**
the at least one electrodynamic brake is an includable brake, so that the brake force of the at least one electrodynamic brake, particularly during emergency braking, can be included towards the brake loading weight of the vehicle.

8. Braking system (13a; 13b) according to one of claims 6 or 7,
**characterised in that**
the electrodynamic brake is formed by a traction drive (9) which has a permanent-field synchronous motor (10), acting during braking operation as a generating brake.

9. Braking system (13a; 13b) according to claim 8,
**characterised in that**
windings of the permanent-field synchronous motor (10) are short-circuited via resistors during braking operation, wherein the resistors are connected in star-connection and, during braking operation, are connected to the windings of the permanent-field synchronous motor.

10. Vehicle (1), in particular a rail vehicle having at least one power wagon (2, 3, 4, 5) with a braking system (13a; 13b),
**characterised in that**
the braking system (13a; 13b) is configured according to one of claims 6 to 9.

## Revendications

1. Agencement (14 ; 140 ; 240 ; 340) de frein d'un véhicule (1) comprenant
- un dispositif (26' ; 26") électropneumatique de frein, qui a une commande (27) électronique de frein et un dispositif (28' ; 28") électropneumatique de soupape à canaux et dans lequel une entrée (29) pneumatique communique avec une sortie (31) d'un conduit (HBL) pour de l'air d'un réservoir principal du véhicule (1),
- une soupape (43) à deux voies, qui est raccordée par une première entrée (42) à une sortie (42) pneumatique du dispositif (26' ; 26") électropneumatique de frein et
- au moins un cylindre (15) de frein, qui agit sur un mécanisme (22) de frein,
**caractérisé**
- **en ce que** le au moins un cylindre (15) de frein est un cylindre de frein passif et
- **en ce qu'**une deuxième entrée (44) de la soupape (43) à deux voies est raccordée à une sortie (47 ; 73) pneumatique d'un dispositif (48' ; 48") de desserrage d'urgence et la sortie (45) de la soupape (43) à deux voies est raccordée à une chambre (16) de pression du au moins un cylindre (15) de frein.

2. Agencement (14 ; 140 ; 240 ; 340) de frein suivant la revendication 1,
**caractérisé en ce que**
dans au moins une ligne (35, 38 ; 76) de commande, qui relie électriquement la une entrée (36, 39 ; 77) de commande d'une soupape (32, 33 ; 74) à canaux du dispositif (28' ; 28") de soupape à canaux à la commande (27) électronique de frein, est monté un interrupteur (64, 65 ; 78) pouvant être manœuvré au moyen d'un dispositif (66) extérieur.

3. Agencement (14 ; 240) de frein suivant l'une des revendications 1 ou 2,
**caractérisé en ce que**
une sortie d'un conduit de desserrage d'urgence, dans lequel pour le desserrage d'urgence du mécanisme de frein associé au moins un cylindre de frein est injectée une pression appropriée de desserrage d'urgence, forme la sortie (47) pneumatique du dispositif (48') de desserrage d'urgence.

4. Agencement (140 ; 340) de frein suivant l'une quelconque des revendications 1 ou 2,
**caractérisé par**
une soupape, dont l'entrée (62) pneumatique communique avec le conduit (HBL) pour de l'air de réservoir principal, forme la sortie (73) pneumatique du dispositif (48") de desserrage d'urgence, dans lequel la soupape est sans pression dans une première position de commutation et dans une deuxième position de commutation applique la pression du conduit (HBL) pour de l'air du récipient principal directement à la soupape (43) à deux voies.

5. Agencement (140 ; 340) de frein suivant la revendication 4,
**caractérisé en ce que**
la soupape est une soupape (67) à canaux à commande électrique ou un robinet d'arrêt avec purge.

6. Système (13a ; 13b) d'une motrice (2, 3, 4, 5) d'un véhicule (1) qui a outre au moins un frein électrodynamique, au moins un autre agencement (14 ; 140 ; 240 ; 340) de frein,
**caractérisé en ce que**
le au moins un autre agencement (14 ; 140 ; 240 ; 340) de frein est constitué suivant l'une quelconque des revendications 1 à 5.

7. Système (13a ; 13b) de frein suivant la revendication 6,
**caractérisé en ce que**
le au moins un frein électrodynamique est un frein calculable de sorte que la force de frein du au moins un frein électrodynamique, notamment lors d'un freinage d'urgence, peut être calculée sur le poids-frein du véhicule.

8. Système (13a ; 13b) de frein suivant l'une quelconque des revendications 6 ou 7,
**caractérisé en ce que**
le frein électrodynamique est formé d'un entraînement (9) en traction, qui agit en fonctionnement de frein en tant que frein générateur, qui a un moteur synchrone à excitation permanente.

9. Système (13a ; 13b) de frein suivant la revendication 8,
**caractérisé en ce que**
les enroulements du moteur (10) synchrone à excitation permanente sont, lorsque le frein est en fonctionnement, court-circuités par des résistances, dans lequel les résistances sont montées en étoile et lorsque le frein est en fonctionnement sont reliées aux enroulements du moteur synchrone à excitation permanente.

10. Véhicule (1), notamment véhicule ferroviaire, comprenant au moins une motrice (2, 3, 4, 5) ayant un système (13a ; 13b) de frein,
**caractérisé en ce que**
le système (13a ; 13b) est constitué suivant l'une quelconque des revendications 6 à 9.
